# EUROPEAN PATENT APPLICATION

(11) **EP 1 862 810 A1**
(43) Date of publication of application: **05.12.2007**
(21) Application number: 06733229.6
(22) Date of filing: 03.03.2006
(51) Int. Cl.: G01S 1/00, H04B 7/00

(54) **SPACE-TIME REAL-TIME SYSTEM**

(30) Priority: 04.03.2005 RU 2005105987
(71) Applicant: Grachev, Valeri Grigirievich, St.Petersburg, 197342 (RU); Nikolayev, Eugueni Ivanovich, Moscow, 117312 (RU)
(72) Inventor: Grachev, Valeri Grigirievich, St.Petersburg, 197342 (RU); Nikolayev, Eugueni Ivanovich, Moscow, 117312 (RU)
(74) Representative: Jeck, Anton
(86) International application number: PCT/RU2006/000098
(87) International publication number: WO 2006/093436

(57) **Abstract**

The method of complex measurement, in the real time mode, of parameters of the spatio-temporal system comprising the hardware complex of the radio-interferometric network with superlong baselines (RNSB-SYSTEM), which hardware complex includes three or more radio-telescopes connected with each other by fast-track communication channels and aimed at extragalactic objects, and transmits the measured parameters to the user, which method consists in performance of the following operations of taking measurements of the basic (fundamental) observable values directly during observation of extragalactic sources; transmitting the data to the processing centre; registering the results of processing of the data in the form of sequence of the discrete current values of OSN correlative functions appearing each half the interval of an individual observation, wherein each observation interval is optimized by two parameters: admissible statistical lapse (error) of measurements of the basic (fundamental) observable values and the own interval in accordance with the Kotelnikov/Nyquist fluctuations of the propagation delay in a medium; instrumental fluctuations in radio-telescopes of the RNSB-SYSTEM wherein the corrective action of all instrumental errors is performed without additional time consumption due to the procedures fulfilled in parallel (simultaneously) with measuring the OSN correlative functions, the corrective corrections of the fundamental observable values in the form of differences between the true and pre-computed model values are used in radio-telescopes of the RNSB-SYSTEM in the feedback circuits for correction of the position of all radio-telescopes in relation to the position of the extragalactic objects and for minimization of errors in the measurements, the errors in time and frequency synchronization are transmitted from the processing centre to each radio-telescope in the form of corrections to the values of the reference frequency and the values of the time signal, these errors in measurements are simultaneously used for shaping the integrated signal intended to the user, from all radio-telescopes of the RNSB-SYSTEM, the user represents (forms) a two-element compound-interferometer with the synchronized RNSB-SYSTEM operating in the mode of the phased grid (array) of the global size with the total surface equal to the sum of the effective surfaces of all radio-telescopes composing the RNSB-SYSTEM.

## Description

The invention refers to radio-engineering, info-communication technologies, information processing, and technique of high-precision spatio-temporal measurements. The invention can be used for creation spatio-temporal systems operating in the real time mode with highly stable synchronization of time and frequency on the global scale distances for the real time mode support of high-precision measurements for all processes running in space.

Today, for solving the problem of precise location of the position and the current time, the most effective methods are, usually, based on organization of global, regional and local measuring systems which are composed of radio-interferometric networks with super-long baselines (RNSB), of the means of space geodesy based on the space navigational systems such as GPS and GLONASS, of the laser location of artificial satellites and the Moon (SLR and LLR), of Doppler radio-engineering systems (DORIS and PRARE).

Various approaches to the solution of the problem of synchronization of time are presented in the published domestic and foreign patents. So, for example, in the patent of the Russian Federation No2040035 [1], the way of synchronization of chronometers for adjusting the time scales separated by great distances is offered. To speed-up the operation of comparing the remote time scales this method suggests, that prior to the time scales transmission session the measurement should be performed of the time delay values in the transmitter and receiver of both A and B stations and also determination of the difference between the values of time delays in the transmitters and receivers of the first and second stations. At the initial moment a UHF noise signal with the frequency *f*s =*f*r is generated by means of code sequence in accordance with the chronometer of the first station A, and record this signal by the same station. The generated signal is then delayed by time for the period equal to the value of the difference between the values of time delays in the transmitter and receiver of the first station A, and thereupon the delayed signal is converted to the frequency *f* = *f*r. The converted signal is power boosted and transmitted in the direction of an artificial satellite equipped with a re-transmitter, upon receipt of the signal with frequency *f*1 by the on-board equipment of the artificial satellite, the signal is re-transmitted to the station B on the frequency *f*2 while preserving the phase relations and within the time range tc the signal is registered by the station B. The resulting degree of synchronization does not meet current requirements.

In another patent of the Russian Federation No2177167 [2] the device is described which contains a geostationary artificial satellite-retransmitter, both the first and second ground stations. Each ground station contains the standards of time and frequencies, a generator of a pseudo-noise signal, analogue and digital scramblers and descramblers. Such scheme of the device ensures matching the time scales of the remote ground stations, and also allows executing exchange of confidential analogue and discrete information protected against unauthorized access, however, it does not solve the problem of high-precision synchronization of time.

In the US patent No5717404 [3] an attempt is made to solve the second part of the problem, namely, determination of an object location in space with usage of an artificial satellite. However the failure in solving the problem of time synchronization sharply diminishes the degree of accuracy of such location.

Time and frequency scales are established on the basis of the standard (reference) systems of time and frequency, of which the signals are issued by appropriate national and international services.

Geodetic data, navigation signals and standard time signals are forwarded to a user with the help of all types of communication.

For all systems of the space geodesy the delay between the actual measurements and access to, and usage of, the results by users is characteristic. The delay factor depends on the time period necessary for collecting the global data, their processing, analyzing and transmission to users. The delay is various for various systems and can be within the range of several days to several months. During this time span the parameters of system vary and, by the current moment, the user is provided with the parameters which refer to the outdated system status or, at the best, with the forecast of the status with a margin error dependent on the time interval between the moment of measurements and the present moment. It diminishes accuracy of spatio-temporal measurements and synchronizations of time and frequency scales.

The real time spatio-temporal system (RT STS) represents a well balanced hierarchical infrastructure of means capable of performing high-precision synchronization of time and frequency at the global distances and carrying out the high-precision continuous spatio-temporal measurements on the Earth surface, in the air and in the outer space.

RT STS can be used in solving the problems faced by the modem researches in the area of info-communications, informatization, uniformity of measurements in the real time mode, supervision, management of economic and social systems and in other spheres of human activity.

The framework of the spatio-temporal system in the real time mode is composed of the network of the global high-speed telecommunication system with bit rate up to tens T-bit (Terabit) per second. It should include:
a. The oligarchic synchronous network (OSN) fully digital, containing junction trunk centers of commutation and synchronization (JTCCS);
b. The support ground stations PVS RV, being the components (units) of radio-interferometry with super-long baselines (RNSB), which use coherent signals from extragalactic sources and contain continuously synchronized frequency/time measurement standards;
c. System of integration of the hardware components RT STS with a national time and frequency standard (reference), radio-astronomic-geodetic network, space navigation systems GLONASS, GPS, GALILEO, phase and phase code radio-navigation systems, systems of radio-location and radio-control, networks of mobilemobilecommunication, systems of the time-and-frequency synchronization and localization, secondary standard bases of time and frequency, info-communication networks integrated in a uniform system trunk, fiber-optical, satellite and other communication channels.

At the moment of filing this application the basis of high-precision determinations of locations is made of the following interlinked techniques:
- Radio-interferometry with super-long baselines (RNSB, VLBI);
- Space navigation system GPS;
- System of laser location of artificial satellites (SLR);
- System of laser location of the Moon (LLR);
- Doppler system of measuring the orbits of artificial satellites (DORIS).

Analyzing the available data regarding the said systems, the International service of parameters of the Earth rotation generates and publishes the data about the International Earth support axes (ITRF), parameters of the Earth orbit parameters (EOP) regarding the International celestial support axes (ICRF), in the form of the bulletin containing parameters of the systems, accumulated in the course of the various past periods of measurements and the forecast of parameters of the Earth rotation for the future.

A user can determine, on the basis of his geodesic coordinates and the forecast of parameters of the Earth rotation, his position concerning the celestial axes.

In view of the impetuous evolution of global fiber optic communication systems, the world community actively studies the break-through RNSB technologies with the purpose of implementation of this most high-precision technique of the global location of objects.

Practical usage of RNSB technologies for solution of the particular problem of global synchronization of telecommunication systems is described in the patent of the Russian Federation 2166234 « Global high-speed telecommunication system » [4]. This solution is the most similar to the claimed invention as it comprises the key elements of the idea of creation of spatio-temporal system which allows solving more general problem of spatio-temporal measurements in the real time mode. The solution presented in [4] is based on the usage of a method of the coherent reception and signal processing from extragalactic sources on the basis of radio-interferometric measurements with super-long baselines (RNSB).

The functional combination of the global network RNSB performing a role of a platform of the fundamental spatio-temporal support (FSTS), and the oligarchic synchronous network (OSN) for integral maintenance by means of allocation of the trunk centers of commutation and synchronization of the global network on the support stations of the RNSB networks belonging to the FSTS platform, integration of the hardware components and creation of the integrated system of the trunk channels for transmission, in the real time mode, of digital data flows, is proposed.

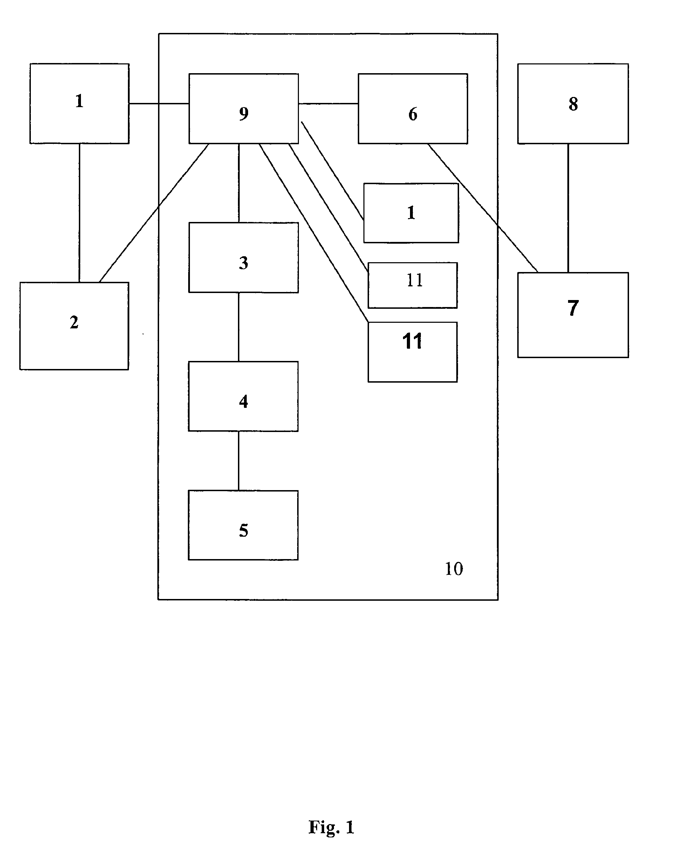

On the flow chart (Fig. 1) one can see an interacting global system of telecommunications and the global system of the time-and-frequency synchronization which represent a sound solution of the stated technical problem. Here the following abbreviations are used:
1 - IERA means the international extragalactic support (reference) axes;
2 - IESS means the international, earth support (reference) axes;
3 - SNS means the space navigational system;
4 - SLOS means the system of laser observations of satellites;
5 - DOS means the Doppler observation system;
6 - STFS means the system of time-and-frequency synchronization;
7 - OSS means the oligarchic synchronous system;
8 - SIDM means the system of integral digital maintenance;
9 - RNSB means radio-interferometry with super-long baselines;
10 - PFSTS means the platform of fundamental spatio-temporal service;
11- JTCCS means the junction trunk centre of commutation and synchronization.

Fig. 1 does not show it, but there are other abbreviated names of such units as TSCTI - that means the transmission system of the coordinate-temporal information, CCDP - that means the centre of correlative data processing, and also DTS - meaning the data transmission system.

Whereas the solution [4] deals with the temporal component of the spatio-temporal system, the claimed invention solves the problem of coordination of both the exact current time and the space location of any object, both on the Earth, and in space.

The technical result is achieved due to creation of the process of continuous radio-interferometric measurements, their correlative processing, self-calibration of units of the global radio-telescope in the real time mode and continuous transmission, to users, of the spatio-temporal information in the real time mode (RT STS).

In a simplified presentation, the RT STS is the multipurpose global radio-telescope composed on the basis of the RNSB technologies, in which all measurements are taken and used in the real time mode. The global radio-telescope continuously plays back its technical parameters, the geodesic coordinates, the synchronized atomic time scales (atomic chronometer) and performs self-calibration on the basis of observation of extragalactic radiating sources. It accumulates the functions of the global fundamental radio-astronomic-geodetic support (reference) network, the group distributed depository of the atomic time and frequency and the spatio-temporal system for solution of the applied problems of various kind. The position and parameters of movement of all objects are measured concerning the support (reference) spatio-temporal basis of the supreme accuracy set by the elements (RSDB stations) of the global radio-telescope. The basic distinctive feature of RT STS consists in continuous performance of measurements, processing, analysis of results and transmission of the conclusions to the users in a single work cycle organized by means of the hardware and methods, being a subj ect of the present invention. The spatio-temporal basis is composed and used on the basis of the current results of measurements, while in all state-of-the-art systems of spatial geodesy the data of the forecast of the system status are used.

The RT STS which comprises the assemblage of systems, hardware, methods, mathematics and software, constitutes the solid basis for the uniformity of measuring techniques in all kinds of scientific, defensive and application activity. The existing and future systems of info-communication, the space and terrestrial geodesy, the radio-navigation system, radiolocation, radio control and other spatio-measuring systems can apply the spatio-temporal basis of the RT STS operating in the real time mode for solution of the problems from metrological verification and calibration of parameters to direct high-precision measurements and rendering services to users. RT STS comprises:
- system of fundamental spatio-temporal support (FSTS) on the basis of the RNSB networks in the real time mode, fixing radio-astronomic-geodetic network of the maximum accuracy and an alternative group scale of the atomic time of the RNSB networks as a reference (support) spatio-temporal system of reference,
- the network of RNSB-stations for propagation of the spatio-temporal basis for solution of applied problems of various users,
- the system of the hardware components of integration with the systems of satellite and optical communication between agencies, the space navigation systems GLONASS, GPS, GALILEO, phase and phase code radio-navigation systems, systems of radiolocation and radio control, networks of mobile communication, systems of time-and-frequency synchronization and localization, info-communication networks.

Operation algorithm of the RT STS consists in the following:
- Set the program to the complex responsible for shaping a global radio-telescope capable of continuous playing back its technical parameters, its geodetic coordinates, the synchronized scales of the atomic time of the RSDB stations and executing self-calibration on the basis of observations of extragalactic radiation sources that allows to form, maintain and develop the support (reference) spatio-temporal framework for the maximum (supreme) accuracy on the Earth surface.
- Pass round high-precision basis to users by functional connection of their RNSB-STATIONS in joint measurements on extragalactic sources for determination of geodetic coordinates and synchronization of a time and frequency of additional stations concerning a support spatio-temporal frame of reference.
- Execute data traffic on high-speed channels.
   Communication systems and an information communication.
- Meter parameters of orbits and compare time scales and frequencies Artificial satellite and space vehicles of various designation concerning support basis spatio - temporal system in an absolute or differential regime of RNSB-SUPERVISION.
- Form high-precision dynamic spatio-temporal system.
   The temporal frame of reference of space basing coupled to a terrestrial support spatio-temporal frame of reference of real time.
- Form and pass round a summarized digital signal of all RNSB-STATIONS of spatio-temporal system, ensuring users possibility of operation in the mode of a compound-interferometer for self-determination of the location and synchronization of a time and frequency concerning a support spatio-temporal frame of reference. Any RNSB-STATION of users can organize now two-element 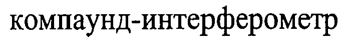 with the synchronized RNSB-SYSTEM PVS RV working in a regime of the phased grating of the global dimensions with the summarized, effective square, the equal sum of the effective squares of all radio-telescopes entering in it.
- Pass round spatio-temporal parameters and signals
   Exact times and frequency by means of all means of the fixed and mobile link.
- Continuously ensure all final state,
   Private and individual users through all types of communication in high-precision spatio-temporal parameters and signals, a time and frequency for high-precision position-fixs and traffic of objects of scientific, economic and military designation for earth surfaces, in air and an outer space, on the sea and underwater.

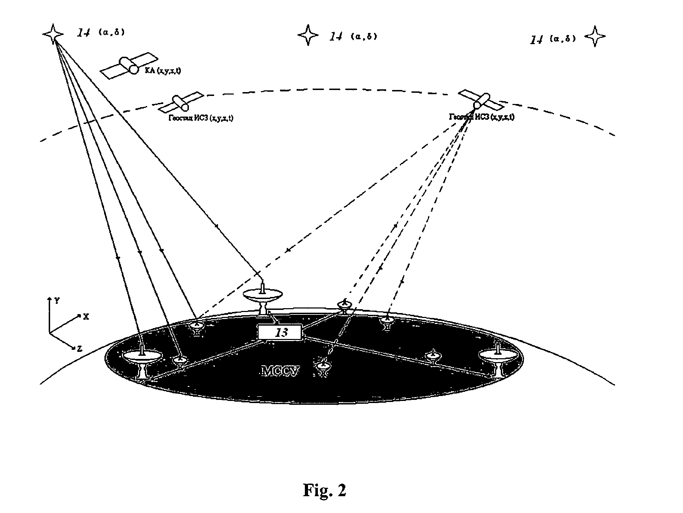

On Figs. 2 the provisional circuit of interacting of various units RT STS, where placed on the determined territory, is shown. On superlong baseline, radio-telescopes 12 exercise watch extragalactic sources - quasars 14. Thus radio-telescopes entering in the system, are coupled to the uniform correlator 13 ensuring corrective action of lapses of supervision, and have possibility of a data transmission on various communication channels, as terrestrial, and with usage of telecommunication satellites 16.

At implementation of the stated idea by one of fundamental devices PVS RV, the radio interferometer with superlong baselines (RNSB) will be. It sets a spatio-temporal frame of reference, permanently plays back and passes round support spatio-temporal basis on the basis of continuous, consecutive observations more than 700 extragalactic sources of a celestial inertial system real time.

To primary goals RT STS refer to:
- Construction high-precision radio-astonomic- geodetic network;
- mutual coordination of high-precision frames of reference: celestial, inertial, earth and dynamic;
- definition of parameters of mutual orientation (parameters of twirl of an Earth) these systems and their monitoring;
- monitoring of traffic of points of an earth's crust (local and global deformations);
- Refinement of parameters of the Solar system;
- Determination of a high-precision atomic time scale, organization of synchronization of a time and frequency on global distances
- An initial communication between a radio astronomy inertial system of coordinates and optical.
- distribution of earth axes on any point of the Earth surface;
   Propagation of a scale of an atomic time.
- -navigation of space vehicles in near and far space;
- Ballistic provision of global navigationals;

And other problems of positioning, a shipping season and synchronization. The fundamental advantages are:
The-guaranteed maximum accuracy of spatio-temporal determinations which are based long-term rows of radio astronomy measurements of mutual angular positions of 700 natural point-wise extragalactic radiation sources, not having proper motions, by means of the global land terrestrial RNSB-SYSTEM possessing as much as possible accessible spatio-temporal resolution capability;

- The-availability secured by visibility of extragalactic radiation sources from an earth surface in a microwave range at any time and under any weather conditions, and also a broad spectrum of their irradiation;
   The-control of integrity STS which is being extremely inertial and long-lasting, is ensured due to possibility of the high-precision continuous analysis of its parameters, the supervision and a system control and resistant to prediction of its future condition;
   The-continuity of performance of system PVS is secured by continuum of irradiation of radio-signals perpetually extragalactic sources, a lump of the receiving radio-telescopes and synchro-train and the backed up RNSB-SYSTEM and system of storage of an alternative group scale of atomic time RT STS.

The main differences of claimed system from analogs and
The mother the following moments are:
- The fundamental observable values are metered directly during observations. Namely, the delay between supervision of an extragalactic source and obtaining of the fundamental observable values makes, usually, value about 15 days, and except for duration of the supervision switches on time consumption for transportation of magnetic mediums and for correlative processing which in some times exceeded write time of data as a result of observations RNSB. In a claimed real time system results of reduction of observations RNSB are gained without a delay, that is directly during supervision in the form of current values of the observable values gained in the form of sequence of the discrete values, following through half of interval of individual observation;
- The observation interval is optimized on two parameters:
   Admissible statistical measuring error of the fundamental observable values and an own interval (by Kotelnikov/Nyquist) fluctuations of a propagation delay in medium and the instrumental fluctuations in hardware of stations RSDB;
- Corrective action of all instrumental errors thus is fulfilled without additional time consumption as a result of the procedures fulfilled in bridge with measurement of OSN correlative functions;
- Approach-correcting corrections of the fundamental observable values in the form of differences between the true and precomputed modelling values are used at RNSB-STATIONS in feedback circuits for implementation of a follow-up system for minimization of lapses of measurements. Namely, timing bugs of a time and frequency are transmitted to everyone station RSDB in the form of a corrections to the values of a reference frequency of 5 MHz and a time signal Is with, that allows to synchronize by means of actuating devices RNSB-SYSTEM with the minimum lapses real time. Besides the same lapses are used for shaping a sum signal of support RNSB-SYSTEM in a regime of a compound-interferometer. Application spatio-temporal basis STS is formed by periodic connection {switching on} in composition of RNSB network of antennas (radio-telescopes) of smaller diameter or the mobile antennas equipped by a means for conducting of measurements on RNSB-SYSTEM.
   RT STS can pass round the spatio-temporal basis in a uniform cycle of measurements by means of mobile small-size info-communication systems and does not require additional systems of checking of time scales and frequencies as it is necessary for systems of space basing.
   The spatio-temporal basis of systems of space basing can be formed by measurement of current coordinates, parameters of orbits and checking of time scales and frequency of space objects by means RT STS concerning basis RT STS in request-free, code-free mode. RT STS is self-calibrated system, it does not require knowledge of navigation and temporal parameters of other systems and can, by means of the is space - temporal basis, to boost quality of problem solving which today are solved: space navigation GLONASS, GPS, GALILEO; phase and phase code radio-navigation systems; systems of a radiolocation and a radio control; networks of mobile communications for positioning abonents; systems of the time-and-frequency synchronization and localization; info-communication networks.

Thus, RT STS is:
- global engineering system of sample of measuring in space of positions and the real time, integrating all available hardware components of spatio-temporal measurements and info-communication,
- basis of unity of spatio-temporal measurements from plotting scales of a micro-cosmos up to cosmological,
- material incarnation of classes of space and time in which there is a traffic of a substance in all forms of its existence.

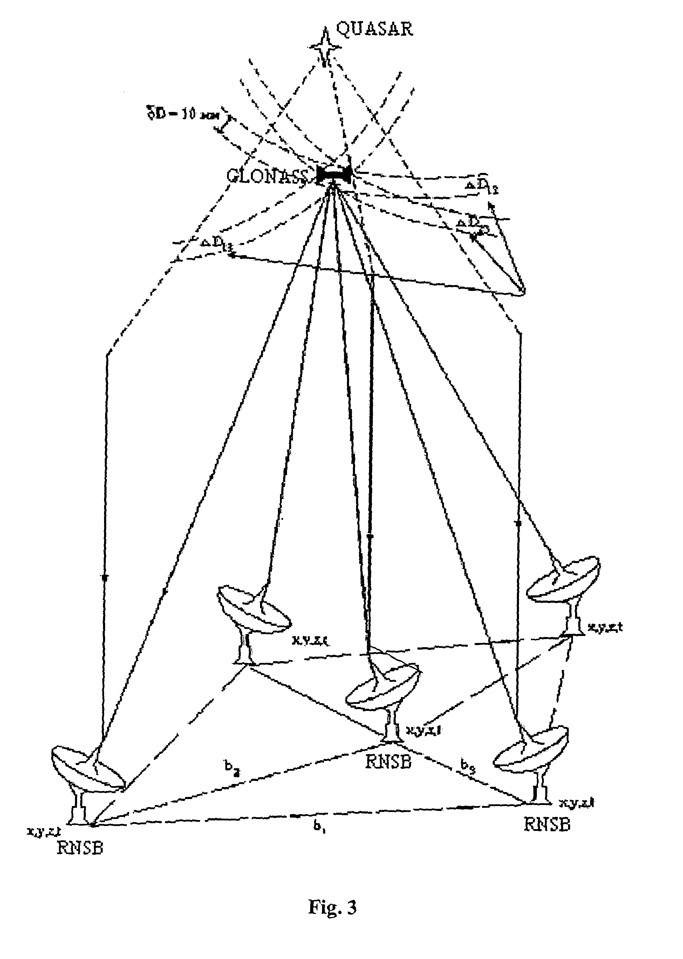

On Figs. 3 for an instance the measuring circuit of differential difference-RANGING RNSB-SYSTEM is presented.

Systems of telecommunications and all types of communication are clocked on a time and frequency on the basis of basis RT STS with playback of the accuracy determined RT STS.

Propagation of high-precision spatio-temporal basis STS will ensure boosting performance of state-of-the-art high velocity systems of telecommunications and links and protection against unauthorized access.

Advantages established info-communication systems on the basis of RT STS are:
Global synchronization of trunk assemblies of commutation and control with the highest accuracy, a capacity growth of existing pipeline systems of link;
Saving of a means for creation of departmental and other parallel systems of coordinate-temporal and navigation provision and clock equipments of trunk networks of link;
Continuous boosting of accuracy of synchronization in process of evolution of spatio-temporal basis RT STS;
Independence and safety of the maintenance grounded on usage national is space - temporal system in a combination to possibility of the international integration of communication systems;
Conservation of possibilities of integral digital maintenance on a data transmission, creation of individual communication channels, usages of telecommunication services Frame Relay, ATM, ISDN, Managed Service, Remote LAN Dial and others.

The State-of-the-art synchronous fiber optic pipeline systems of spectral condensation DWDM with bit rates above 10 Gbit/sec in each frequency channel and the aggregated rate above 10 Tbit/sec are sensitive to accuracy of frequencies of tuning lasers, breakdown of a coherence of signal conditionings in cascade multiplexers, de-multiplexers and filters. Boosting of a coherence of such systems as a whole is an actual problem as allows to sink effectively, figure of revivifiers and boosters of an optical signal, to sink power and its store in optical sources and to improve service characteristics of units of optical transmission channels (point-point) and transmission networks as a whole. The urgency of a problem is boosted in view of emersion in the market of optical systems of link of system with a temporal optical channel separation (OTDM) which demand the most high-precision synchronization of a time and frequency.

As to theoretical principles on which the claimed invention it is necessary to consider, that correspondence with the theory of an electrodynamics and propagation of electromagnetic waves is based, the width of the radio telescope beam is proportional to a wave length of irradiation and inversely proportional to the maximum size of the aperture. Formally, it means, that the global radio-telescope with linear dimension of the aperture, equal to average diameter of an Earth of 12,742 thousand kilometers, in a microwave range can form a directional diagram with width from 0,5 seconds of an arc on a wave length of 30 meters up to 0,05 milliseconds of an arc on a wave length of 3 millimeters. Such radio-telescope will possess appropriate spatial angular resolution by criterion 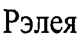 of the same value.

According to classification of antennas of a microwave range the RNSB-SYSTEM is a correlative array with the aperture synthesized during twirl of an Earth.

Full-rotation reflex paraboloid is the standard unit of RNSB-SYSTEM and the most widespread construction of the radio-telescope, the generalized circuit of the global radio-telescope, being the generalized model of RNSB-SYSTEM, a mandatory unit is the correlative{correlation} special processor which fulfills the following fundamental functions which are substituting for the equivalent functions of the individual{single} radio-telescope:
- Forms a carcase (frame) of the main mirror;
- Ensures the space attending a source;
- Meters a dispersion of an input signal of the global radio-telescope.

Simplification of model of the global radio-telescope touches two differences:
- The aperture of the main mirror is filled partially;
- "Panels" are dynamic transferred on a form-building surface of the main mirror as a result of twirl of an Earth and a repositioning of their footprint of satellite beams, and also footprint of satellite beams of links of baselines to a plane, perpendicular to a direction on a source.
   The generalized approach is based on representation of radio astronomy production engineering RNSB of measurement of a spatial coherence of fields as the individual solution of the general problem of extraction of the information on properties, a position and traffic of various objects in the space examined by means of electromagnetic waves of various ranges. These waves are radiated by objects in following possible conditions.
- Spontaneously (a passive method of a radiolocation) - natural radiation sources: quasars, space masers, radio stars, pulsars and other sources. space, navigation artificial satellites, satellites of remote space probing.
- Are formed as a result of reflection from objects of the probing oscillations radiated by the station (an active method of a radiolocation) so, for example, functions bi-static, the radio-locator in a receiver-transmitter regime of probing of natural objects (planets, satellites of planets, asteroids, comets, metheoroids) and aircrafts.
- Are formed as a result of reflection of probing signals from (a semi-active method of a radiolocation), known as the monostatic radiolocator with separation of functions of transmission and reception between miscellaneous stations or a radar interferometer.
- Are re-emitted by the responder installed on installation with incoming 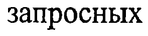 signals from the station (the active answer), for an instance usage of space vehicles and an artificial satellite can be.

The basic principle of relative measurements of coordinates and their derivatives consists that analog of range is time lag of a signal between the receiver and the sender, analog of a radial velocity - a Doppler shift of frequencies of a received signal, analog of directing cosine - a difference of time lags and analog of a derivative of directing cosines - a difference of Doppler frequency of the signals received in diverse points of reception.

No other principles of measurement of relative coordinates of objects and their derivatives in measuring radio systems are used.

Relative positions of objects their derivatives are determined in an intersection point of surfaces of a position in a many-dimensional measuring system.

The RNSB-SYSTEM, by a principle of measurement, is the difference-ranging system and its fundamental instrument parameters are a geometrical propagation delay, and its derivatives unequivocally coupled to a path-length difference from a source up to receiving antennas, that is a difference of ranging.

Observations on RNSB-SYSTEM of extragalactic sources with known coordinates allow to meter parameters of baselines RNSB, their orientation concerning support celestial axes ICRF and to meter a difference of hours of stations RSDB. Thus, fulfill complex calibration parameters of RNSB-SYSTEM. Differences 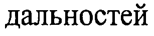 or meter geometrical propagation delays concerning a plane, perpendicular to a direction on a source, and passing {taking place} through support station RSDB at astrophysical probings or through a geocentre at astrometric probings, position of the prototype systems which are being a far-field region of RNSB-SYSTEM, meter in a differential regime in the form of a difference of angular vectors of positions of objects concerning coordinates of support extragalactic radiation sources.

Position of the objects which are being a near-field region of RNSB-SYSTEM, meter also in a differential regime, but a hyperbolic method in the form of three measurements of state vector of installation of their derivatives by means of the RNSB network, calibrated on the basis of the extragalactic radiating sources which are being on close angular separations. Differences of ranges or in this case meter geometrical propagation delays concerning the spherical surface which are taking place through support station RSDB and which centre coincides with state vector of a prototype system.

It is important to note, that
- At differential observations on RNSB-SYSTEM of objects on a hum (background) of extragalactic sources the knowledge of the Earth rotation (twirl) parameters is not required,
- Effect of an aerosphere and an ionosphere on measurement of positions of objects on a hum of extragalactic sources is minimized, as bring in the equal contribution to their positions.

But at observations on RNSB-SYSTEM of objects in an absolute regime the knowledge of parameters of twirl of the Earth and parameters of an aerosphere and an ionosphere is required.

Thus, for the objects which are being a far-field region, the RNSB-system is cleanly goniometric, that is the wave front of irradiation of a source is planar and the difference 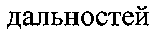 is unequivocally coupled to appropriate angles between each of baselines of RNSB-SYSTEM and a direction on a source. For objects in a near-field region the wave front has the spherical form and the RNSB-SYSTEM any more is not cleanly goniometric. For a near-field region of a difference 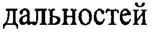 for each baseline of RNSB-SYSTEM now contact position lines of a source (a geometrical place of points) which for the difference-ranging system are hyperbolas for measurements in a plane.

For three-dimensional space a geometrical place of points are the hyperbolic surfaces (hyperboloid) organized by twirl of hyperbolas around of each reference lines. For a near-field region the position of a source can be determined by means of 2 element RNSB-SYSTEMS by consecutive measurements at various positional angles, that is as a result of a consecutive synthesis of three-dimensional RNSB-SYSTEM. The univocal direction on a source can be metered as a result of individual (single) measurement at usage of 3 element RNSB-SYSTEMS. The instant (current) position of a source in a near-field region is unequivocally coupled to three-dimensional coordinates of stations RSDB if the RNSB-SYSTEM consists not less than of 4 antennas. The complete state vector of installation is gained as a result of a series of continuous measurements of a difference 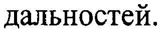
Lapses of measurements of positions of objects for difference-ranging RNSB depend on lapses of coordinates of stations RSDB, parameters of baselines, synchronization of hours, effect of an aerosphere and an ionosphere and the instrumental effects. Joint observations of extragalactic sources with known coordinates{co-ordinates} and objects in a near-field region allow 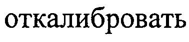 a position of all baselines of RNSB-SYSTEM concerning the selected extragalactic radiation source or group of sources of directory ICRF, to synchronize hours of stations and to eliminate{remove} effects of propagation and the instrumental effects. Lapses of measurements will depend on accuracy of calibration and a time of its {her} action which depends on an angular separation between a support quasar and a prototype system, from accuracy of model of twirl of the Earth and its forecast for a time interval between contiguous calibrating procedures of observations of support objects. Lapses of calibration are minimum if observations are conducted in the combined measuring system allowing simultaneous measurement of support quasars and prototype systems.

Two ways of usage of support objects for calibration the position of baselines of RNSB-SYSTEM are possible:
- with the help of the operative forecast of parameters of orientation of Earth EOP rather ICRS at the moment of observations and a time stamping of coordinates of stations RSDB to a support geodetic system of coordinates ITRS,
- with the help of differential observations of prototype systems concerning the quasars which are being on close angular separations.

Presented on Figs. 3 circuit is applied to control the flights of space vehicles (space vehicle) of a deep space in the American Doppler network of tracing DSN NASA (Deep Space Network) in structure of three antennas in Gladstone (USA), Madrid (Spain) and Canberra (Australia) in an on-line operation. It{she}, partially, solves the same problems, as RT STS. The DSN system conducts measurements of Doppler frequency drift and phases of signals of space vehicle in a differential regime concerning the extragalactic sources 14 which are being on close angular separations. RNSB-observation of extragalactic sources are conducted in an on-line operation with a data transmission on low-speed switched channels in centre of processing in Goddard Mission Control Center Goddard Space Flight Center (GSFC).

Unlike DSN NASA in claimed system of present coordinate, and corrections of a time and frequency of space vehicles, navigation satellites of space navigational GLONASS or other systems determine orbit parameters on their navigation signals in differential codeless mode a difference-RANGING method (hyperbolic) by means of system RSDB and extragalactic sources - quasars. A position of an artificial satellite determine in an intersection point of the hyperbolic surfaces (hyperboloids) organized concerning baselines RNSB b1, b2, b3, b4.

At usage of forecast EOP of a lapse of calibration of a position of baselines RNSB are completely determined by lapses of the live forecast which depends on the time which has been last from the beginning of last measurements EOP and according to IERS. According to these data the daily forecast leads to minimum accessible value of a random error of parameters of baselines of RNSB-SYSTEM and their orientation about 5 sm for stations RSDB near to equator of an Earth. In a month this error increases up to half meter. Except for an error coupled to forecast EOP, at the given method it is necessary to consider special measurements all lapses of propagation, instrumental errors, separately to synchronize hours of stations RSDB, thus, the given aspect of measurements can be referred to a method of absolute measurements.

At the differential measurement method of a lapse 0.00001 angular seconds of an arc and 1 cm on a difference 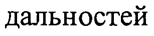 are determined by accuracy of observations of support installation, that is with accuracy, and the method can be referred to a method of relative measurements.

For all remaining known circuits of spatio-temporal measurements the RNSB-SYSTEM also, and mainly, allows to meter rules {positions} of send-receive stations with the maximum accuracy, to calibrate parameters of baselines in the diverse systems:
- goniometric system;
   The RANGING SYSTEM;
- The integrating-RANGING SYSTEM;
   The angle-RANGING SYSTEM.

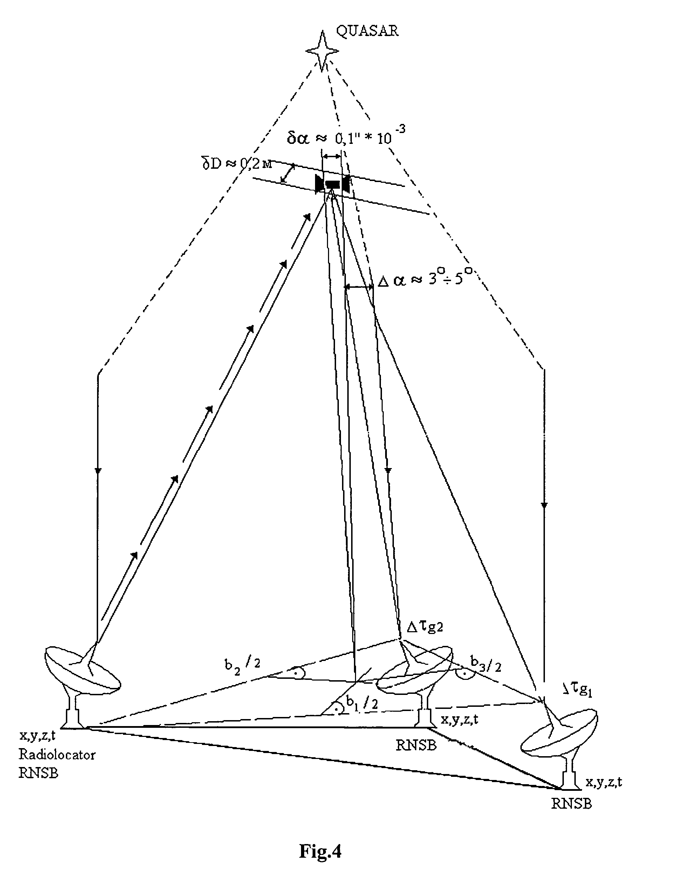

The RNSB-SYSTEM added by an active transmitting means, can synthesize any measuring circuit and implement any method of spatio-temporal measurements of relative positions and their component velocity vectors for objects in a near and far area in a combination to possibility of accomplishment of goniometric measurements on support extragalactic sources for calibration parameters of baselines and synchronization of time scales. Another advantage is coupled with possibility to conduct measurements concerning an inertial system of coordinates ICRF or earth support geodetic system ITRF. Thus the output measuring gear, a correlative special processor, should combine in itself possibilities of the optimum detecting filter and a measuring set of a mutual correlation function of signals having dynamic varying simultaneous displacement on a time and frequency. On Figs. 4 the circuit of differential radar RNSB-SYSTEM where the position of a space vehicle 21 is determined, proceeding from data about a spherical surface of 20 positions of a space vehicle 21 on range and about a solid angle of 19 positions of a space vehicle 21 on an angle is presented. State vector, orbit parameters and corrections of a time and frequency of any objects in air and an outer space are determined on radar echo returns in a differential regime, in mono-static or bi-static regime or by the difference-ranging method (hyperbolic) by means of RNSB networks, by results of supervision of extragalactic sources - quasars with known coordinates. The position of the object (source) is determined by a triangulation method on the measured range between installation and the radio-locator and to the measured differences of range between the object and remaining stations RSDB or cleanly hyperbolic method in an intersection point of the hyperbolic surfaces (hyperboloids) organized concerning baselines RNSB b1, b2, b3, b4.

STS is multilevel hierarchical network structure which passes round the parameters.
- Land {Terrestrial} radio-astronomic-geodetic component STS (ITRF) is passed round to geodetic networks of users through all available production engineering: RNSB, GLONASS and differential direction-finding inter-systems, including info-communicational networks and mobile communications.
- Air and space components STS are passed round with usage of differential measuring radio systems of all known types:
   -goniometric, ranging, angle-ranging, difference-ranging, integrated-ranging, and also by means of their combinations in differential modes.
- Operative measurements today are conducted with usage of data of forecast (EOP) based on the forecast of the position of geodetic coordinates regarding ICRF and coordinates of air and space objects on the background of ICRF.
- Continuous differential spatio-temporal measurements of the maximum accuracy are conducted by means of the combined radio systems and RNSB-SYSTEM with application of calibration on radiation sources from directory ICRF, being on transmission of high-precision signals on terrestrial communication channels, through radio-navigation systems, through satellite communication systems and a digital TV broadcasting, through networks of an IP-telephony, the Internet by means of protocol NTP to within 1 msec and «nano nucleus » to within 1 nanosecond, systems of mobile communication.
- Services of spatio-temporal system to users are granted through self-determination of state vector on navigation signals and high-precision synchronization of a time and frequency and in a regime of external determination and transmissions of spatio-temporal parameters to a user.

Summing up all aforesaid, it is possible to tell, that the claimed real time spatio-temporal system (RT STS) represents a multipurpose global radio-telescope executed on the basis of the RNSB technologies wherein all measurements are performed and used in the real time mode. The global radio-telescope continuously plays back its technical parameters, the geodetic coordinates, the synchronized scales of the atomic time (chronometer) and performs self-calibration on the basis of the results of observation of extragalactic radiating sources. It combines in itself the functions of:
- a global fundamental (basic) radio-astronomic-geodetic support (reference) network,
- a group distributed container of the atomic time and frequency,
- the coordinate-temporal and navigational systems for solution of applied problems in various fields of activity, connected among themselves by high-speed communication channels and aimed at the extragalactic objects, wherein the fundamental observable values are measured directly during observations and the results of processing the observations data obtained directly during observation in the form of current values of the observable values accumulated in the form of sequence of the discrete values collected each half of the interval of a single (individual) observation, wherein each observation interval is optimized by two parameters:
   - admissible statistical lapse (error) of measurements of the basic (fundamental) observable values and the own interval in accordance with the Kotelnikov/Nyquist fluctuations of the propagation delay in a medium;
   - instrumental fluctuations in the equipment of the observation stations (in this case - the radio-telescopes of the RNSB-SYSTEM),
- wherein the corrective action of all instrumental errors is performed without additional time consumption due to the procedures fulfilled in parallel (simultaneously) with measuring the OSN correlative functions,
- the corrective action in respect of the fundamental observable values in the form of differences between the true and pre-computed model values are used in the observation stations in the feedback circuits for realization of the tracking system by minimization of errors in the measurements, at that the errors in time and frequency synchronization are transmitted from the processing centre to each observation station (radio-telescope) in the form of corrections to the values of the reference frequency 5 MHz and the values of the time signal Is, which enables synchronizing the network by the executive devices with minimal errors in the real time mode, and, at the same time,
- these errors in measurements are simultaneously used for shaping the integrated signal in the reference network of the compound-interferometer.

At computer simulation analysis of architecture RT STS the data available in the Russian Federation about the hardware and organizational possibilities were used.

The RT STS have been composed of:
1. The basic sub-system, i. e. the fundamental spatio-temporal system (FSTS), shaping the supporting (reference) spatio-temporal basis of the maximum (supreme) accuracy (Stratum 0) comprising: not less than seven (including redundancy) base stations of the RNSB with full-rotation radio-telescopes having the diameter of some 32 to 64 meters and the atomic containers of the time scales and frequencies F1-75. All base stations are inter-connected by the optical data-transmission channels.
2. The basic sub-system - the application spatio-temporal system (ASTS), forming spatio-temporal basis of the first level of accuracy (Stratum 1) with unlimited quantity of radio-telescopes having the diameters up to 32 meters and atomic containers of time scales and frequencies F1-75. All radio-telescopes are connected by communication channels with the Center of control, collection, processing, and analysis and data transmission.
   Basic sub-systems FSTS and ASTS and their components of all levels of accuracy are completely compatible.
3. Sub-system ASTS, shaping the coordinate-temporal basis of the second level of accuracy (Stratum 2), comprising some 96 movable 3-meter full-rotation antennas, hydrogen standards of frequency F1-76. All antennas are equipped with correlative processors for the off-line processing the measurements, and connected by data-transmission channels with the support units of the basic Sub-system of the supreme accuracy (Stratum 0) or with the Center of control, collection, processing and data analysis in the control/calibration mode.

1. Sub-system of the ASTS, the second level of accuracy (Stratum 2) with mobile radio-telescopes of up to 3m in diameter, are equipped with satellite communication and are connected functionally with the base stations of the basic sub-systems Stratum 0 and Stratum 1.
2. Standard (reference) time base and the frequencies of the Frequency Distribution Agency (functionally).
3. The High-speed trunk system of optical communication channels connecting base stations of the integral system FPVO and the Centers for control, collection, and processing and data transmission.
4. The Sub-system of communication via geostationary satellites on the basis of the VSAT technologies, DirecPC and systems of direct TV broadcasting.
5. The Sub-system of transmission of the spatio-temporal information, in the form of the system of mobile and fixed info-communication networks necessary for extension of the reference spatio-temporal basis of the STS to users in the real time mode.
6. The Sub-system of the supervision and management RT STS.
7. The Sub-system of the user equipment.
8. Hardware of users of mobile information/navigation systems of the new generation.

Results of the simulation analysis of RNSB on the basis of data available from the international sources have shown, that the basic system - platform FSTS (Stratum 0) - will allow measuring with the following accuracy:
- Parameters of three-dimensional coordinates of points on the Earth surface and global distances, including distances between continents - millimeters and micrometers;
- Shift of points of the Earth crust, including global tectonic shifts - millimeters per year;
- Parameters of the Earth orientation (coordinates of a pole, universal time, duration of a day, precession and nutation) - millimeters and tens of microseconds;
- Synchronization of the atomic time scales separated by the global distances
- tens of picoseconds;
- Coordinates of radio-sources and space vehicles - microseconds of an arc and, at construction of their radio-images - a few tenths of a millisecond of an arc;
- Determination of parameters of the fundamental astronomical constants of the Solar system-microseconds of an arc.

Application RT STS (Stratum 1) will allow measuring with the following accuracy:
- Parameters of the three-dimensional coordinate of points of the Earth surface and that of the global distances - millimeters and few centimeters;
- shift of the Earth crust, including global tectonic shifts - centimeters per year;
- Parameters of the Earth orientation (coordinates of a pole, universal time, duration of a day, precession and nutation) - millimeters and tens microseconds;
- Synchronization of the remote atomic time scales at the global distances - hundreds of picoseconds;
- Coordinates of radio-sources and space vehicles - milliseconds of an arc.

The Sub-system RT STS (Stratum 2) will allow the following accuracy in measurements:
- Parameters of the three-dimensional coordinates of points on the Earth surface-tens centimeters
- Global distances - milliseconds of an arc;
- Synchronization of the remote atomic time scales at the global distances - few nanoseconds;
- Coordinates of radiation sources and space vehicles - few milliseconds of an arc.

At present the inventors have information on the disclosure of any alternative methods which could match or exceed in accuracy of spatio-temporal determinations on the global distances, in the near and far space, the method of RNSB and its generalized applications.

## Claims

1. The method of complex measurement, in the real time mode, of parameters of the spatio-temporal system comprising the hardware complex of the radio-interferometric network with superlong baselines (RNSB-SYSTEM), which hardware complex includes three or more radio-telescopes connected with each other by fast-track communication channels and aimed at extragalactic objects, and transmits the measured parameters to the user, which method consists in performance of the following operations of:
- taking measurements of the basic (fundamental) observable values directly during observation of extragalactic sources;
- transmitting the data to the processing centre;
- registering the results of processing of the data in the form of sequence of the discrete current values of OSN correlative functions appearing each half the interval of an individual observation, wherein each observation interval is optimized by two parameters:
• admissible statistical lapse (error) of measurements of the basic (fundamental) observable values and the own interval in accordance with the Kotelnikov/Nyquist fluctuations of the propagation delay in a medium;
• instrumental fluctuations in radio-telescopes of the RNSB-SYSTEM,
- wherein the corrective action of all instrumental errors is performed without additional time consumption due to the procedures fulfilled in parallel (simultaneously) with measuring the OSN correlative functions,
- the corrective action in respect of the fundamental observable values in the form of differences between the true and pre-computed model values are used in radio-telescopes of the RNSB-SYSTEM in the feedback circuits for correction of the position of all radio-telescopes in relation to the position of the extragalactic objects and for minimization of errors in the measurements,
- the errors in time and frequency synchronization are transmitted from the processing centre to each radio-telescope in the form of corrections to the values of the reference frequency and the values of the time signal,
- these errors in measurements are simultaneously used for shaping the integrated signal intended to the user, from all radio-telescopes of the RNSB-SYSTEM,
- the user represents (forms) a two-element compound-interferometer with the synchronized RNSB-SYSTEM operating in the mode of the phased grid (array) of the global size with the total surface equal to the sum of the effective surfaces of all radio-telescopes composing the RNSB-SYSTEM.
